# DEMANDE DE BREVET EUROPEEN

(11) **EP 0 780 957 A1**
(43) Date de publication de la demande: **25.06.1997**
(21) Numéro de dépôt: 96402523.3
(22) Date de dépôt: 22.11.1996
(51) Int. Cl.: H02K 15/09

(54) **Machine pour bobiner automatiquement un induit de petit moteur électrique à courant continu**

(30) Priorité: 22.12.1995 FR 9515440
(71) Demandeur: MOTEURS LEROY-SOMER (Société Anonyme française), F-16015 Angouleme Cédex (FR)
(72) Inventeur: Triarte, Richard, 16170 Saint-Amant de Nouere (FR)
(74) Mandataire: Derambure, Christian

(57) **Abrégé**

La machine comporte :
- des moyens formant crochet adaptés à accrocher le fil conducteur (9) à la fin d'une opération de bobinage d'un enroulement ;
- des moyens pour déplacer les moyens formant crochet (22) de façon à couper la trajectoire du fil conducteur (9) lorsque le bras (5) tourne afin d'accrocher ledit fil conducteur (9), puis à emener ledit fil conducteur (9) au voisinage de l'une des chevilles (11a, 11b, 11c) ;
- des moyens pour faire passer le fil conducteur autour de ladite cheville (11a, 11b, 11c), et des moyens pour libérer le fil conducteur (9) des moyens formant crochet (22).

## Description

La présente invention concerne une machine pour bobiner automatiquement un induit de petit moteur électrique à courant continu à rotor bobiné.

On connaît des machines du type précité qui comportent, de façon classique :
- des moyens pour supporter un induit à bobiner de façon que l'axe dudit induit ait une position prédéterminée;
- un bras tournant monté sur un arbre de rotation d'axe perpendiculaire à l'axe de l'induit à bobiner;
- un guide monté à l'extrémité libre du bras tournant et adapté à dévider un fil conducteur, de façon à insérer, lorsque le bras tourne, un nombre prédéterminé de spires à l'intérieur de deux encoches conjuguées de l'induit pour constituer un enroulement de spires logé dans ces deux encoches;
- au moins deux chevilles situées à des distances respectives différentes de l'induit à bobiner pour la formation d'une boucle de fil conducteur passant autour de l'une des chevilles entre deux enroulements consécutifs de spires.

Une telle machine nécessite, après le bobinage de chaque enroulement, l'arrêt de la machine et une intervention d'un opérateur pour saisir le fil conducteur dans sa partie libre entre l'induit et l'extrémité libre du bras tournant, de façon à extraire une longueur supplémentaire de fil suffisante pour passer ledit fil autour de l'une des chevilles afin de former une boucle de fil avant la reprise de l'opération de bobinage pour former l'enroulement suivant.

Cette interruption du bobinage est relativement longue dans la mesure où les consignes de sécurité imposent la présence autour de la machine de cloisons de protection mobiles que l'opérateur doit ouvrir avant de pouvoir accéder à la machine pour la formation d'une boucle, et refermer avant la reprise du bobinage.

La formation d'une boucle entre le bobinage de deux enroulements consécutifs rend donc nécessaire la présence permanente d'un opérateur, et diminue fortement la productivité de la machine à bobiner.

Le but de la présente invention est de remédier aux inconvénients précités des machines à bobiner connues, et qui soit capable de former automatiquement la boucle prévue entre deux enroulements consécutifs.

Suivant l'invention, la machine du type précité est caractérisée en ce qu'elle comporte en outre :
- des moyens formant crochet adaptés à accrocher le fil conducteur à la fin d'une opération de bobinage d'un enroulement ;
- des moyens pour déplacer les moyens formant crochet de façon à couper la trajectoire du fil conducteur lorsque le bras tourne afin d'accrocher ledit fil conducteur, puis à emener ledit fil conducteur au voisinage de l'une des chevilles ;
- des moyens pour faire passer le fil conducteur autour de ladite cheville et des moyens pour libérer le fil conducteur des moyens formant crochet.

La machine est donc capable de former automatiquement une boucle après le bobinage d'un enroulement et avant le bobinage de l'enroulement suivant.

Suivant une version intéressante de l'invention, la machine comporte des moyens pour commander la rotation du bras tournant jusqu'à une position prédéterminée lorsque les moyens formant crochet sont déplacés pour couper la trajectoire du fil conducteur, de façon que les moyens formant crochet accrochent ledit fil conducteur.

Suivant une version avantageuse de l'invention, les moyens pour faire passer le fil conducteur autour de la cheville comprennent au moins un élément presseur et des moyens pour déplacer cet élément presseur sensiblement parallèlement à l'axe de la cheville, et l'élément presseur comporte un évidement longitudinal qui vient coiffer la cheville tandis que l'élément presseur fait passer le fil conducteur autour de ladite cheville lorsqu'il est déplacé vers celle-ci.

Le fil conducteur est donc passé de façon sûre et fiable autour de la cheville concernée.

Suivant une version préférée de l'invention, les moyens pour libérer le fil des moyens formant crochet comprennent un crochet escamotable adapté à s'effacer lorsque le fil conducteur est passé autour de la cheville.

D'autres particularités et avantages de la présente invention apparaîtront dans la description ci-après.

Aux dessins annexés donnés à titre d'exemples non limitatifs :
- les figures 1 et 2 sont des schémas représentant respectivement en vue de dessus et en vue en élévation une boucle réalisée avec la machine selon l'invention;
- la figure 3 est une vue partielle en perspective représentant les moyens essentiels d'une machine selon un mode de réalisation de la présente invention ;
- la figure 4 est une vue de face de la machine de la figure 3 prise depuis la droite de cette figure, certains éléments de la machine étant enlevés pour la clarté de la figure ;
- la figure 5 est une vue partielle en élévation de la machine de la figure 3 ;
- les figures 6 à 13 sont des schémas représentant respectivement les différentes étapes de formation d'une boucle sur la machine représentée aux figures 3 à 5 ;
- la figure 14 est une vue en élévation coupée dans sa moitié droite selon XIV-XIV à la figure 15, d'un mode de réalisation du doigt presseur ;
- la figure 15 est une vue de gauche du doigt presseur de la figure 14 ;
- la figure 16 est une vue en élévation d'un mode de réalisation du doigt supportant le crochet pivotant, ledit crochet étant dans sa position normale ;
- la figure 17 est une vue semblable à la figure 16, le crochet étant dans sa position escamotée.

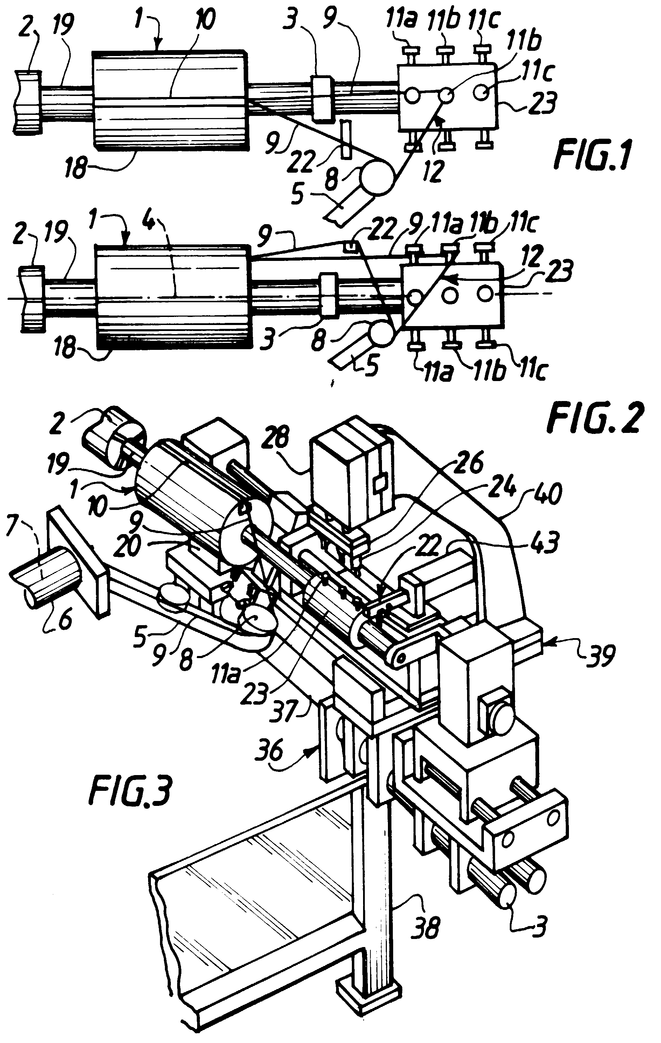

Dans le mode de réalisation représenté aux figures, la machine pour bobiner automatiquement un induit 1 de petit moteur électrique à courant continu à rotor bobiné, comporte :
- des moyens 2,3 pour supporter un induit 1 à bobiner de façon que l'axe 4 dudit induit 1 ait une position prédéterminée ;
- un bras tournant 5 monté sur un arbre de rotation 6 d'axe 7 snsiblement prependiculaire à l'axe 4 de l'induit 1 à bobiner ;
- un guide 8 monté à l'extrémité libre du bras tournant 5 et adapté à dévider un fil conducteur 9, de façon à insérer, lorsque le bras 5 tourne, un nombre prédéterminé de spires à l'intérieur de deux encoches 10 conjuguées de l'induit 1 pour constituer un enroulement de spires logé dans ces deux encoches 10 ;
- au moins deux chevilles 11a, 11c situées à des distances respectives différentes de l'induit 1 à bobiner pour la formation d'une boucle 12 de fil conducteur 9 passant autour de l'une des chevilles 11a, 11b, 11c, entre deux opérations consécutives de bobinage d'un enroulement de spires (voir figures 1 et 2).

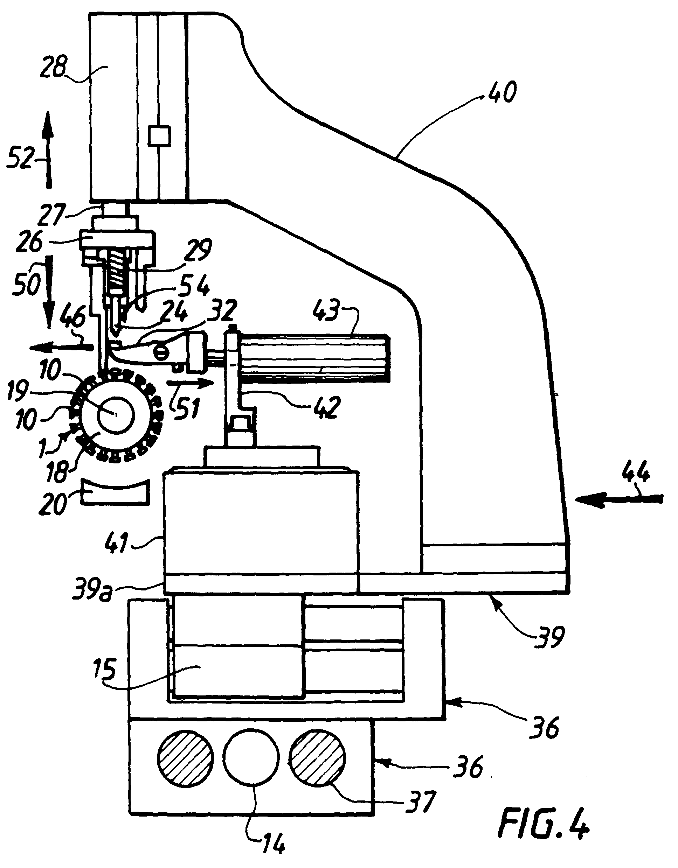

De façon classique, l'induit 1 comporte un paquet 18 de tôles magnétiques emmanché sur l'arbre 19. Comme représenté à la figure 4, des encoches 10 sont ménagées à la périphérie du paquet 18 de tôles pour recevoir les spires bobinées des enroulements d'excitation de l'induit 1.

Dans la position de bobinage représentée aux figures, l'induit 1 est supporté par l'intermédiaire de son arbre 19 qui est pris, à une extrémité par un élément formant pince 2, et à son autre extrémité par un élément formant palier 3. L'élément formant pince 2 est adapté à faire tourner l'induit 1 sur lui-même pour placer dans la position requise les encoches 10 adaptées à recevoir les spires de fil conducteur 9 du prochain enroulement à bobiner.

Un berceau 20 mobile est adapté à recevoir un induit 1 à bobiner et à l'amener dans la position de bobinage dans laquelle il pourra être saisi par la pince 2 et le palier 3. Le berceau 20 est également adapté à recevoir un induit 1 bobiné.

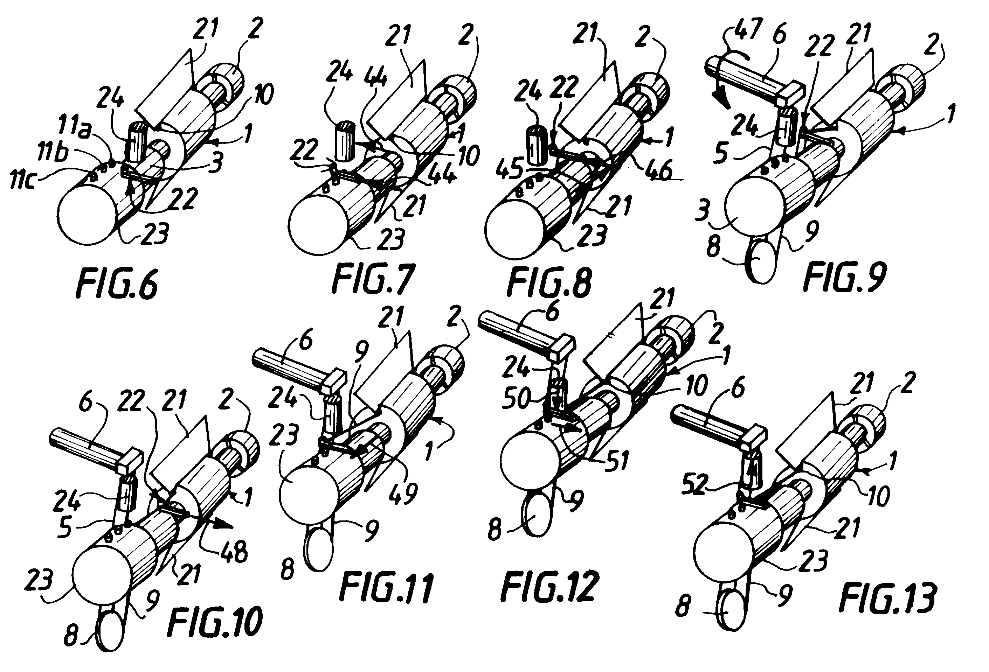

Comme schématisé aux figures 6 à 13, des plaques de guidage 21 amovibles sont insérées respectivement dans chaque encoche 10 de façon à guider le fil conducteur 9 jusqu'au fond de l'encoche 10 correspondante lorsque le bras tournant 5 tourne pendant une opération de bobinage.

Suivant l'invention, la machine comporte en outre :
- des moyens formant crochet 22 adaptés à accrocher le fil conducteur 9 à la fin d'une opération de bobinage d'un enroulement;
- des moyens pour déplacer les moyens formant crochet 22 de façon à couper la trajectoire du fil conducteur 9 lorsque le bras 5 tourne afin d'accrocher ledit fil conducteur 9, puis à amener ledit fil conducteur 9 au voisinage de l'une des chevilles 11a, 11b, 11c ;
- des moyens pour faire passer le fil conducteur 9 autour de la dite cheville 11a, 11b, 11c , et des moyens pour libérer le fil conducteur des moyens formant crochet 22.

Dans la réalisation représentée, trois chevilles 11a, 11b, 11c sont montées sur un manchon 23 disposé dans l'axe de l'induit, les trois chevilles 11a, 11b, 11c étant alignées selon une direction parallèle ou sensiblement parallèle à l'axe 4 de l'induit 1.

Pour ne pas gêner la rotation de l'induit 1 sur lui-même en vue du changement des encoches 10 adaptées à recevoir le nouvel enroulement à bobiner, le manchon 23 porte de préférence, comme schématisé aux figures 1 et 2, plusieurs groupes de trois chevilles 11a, 11b, 11c disposés régulièrement à la périphérie dudit manchon 23. Ce manchon 23 est alors monté de manière pivotante autour de l'axe 4 de l'induit 1, cette rotation étant commandée par des moyens moteurs classiques au'il est inutile de décrire ici.

On a schématisé aux figures 1 et 2 les moyens formant crochet 22 interposés sur la trajectoire du fil conducteur 9 à la fin d'une opération de bobinage d'un enroulement pour accrocher ledit fil conducteur 9, ainsi qu'une boucle 12 passant autour de la cheville 11b et formée par des moyens et selon un processus que l'on va décrire ci-dessous.

L'accrochage du fil conducteur 9 par les moyens formant crochet 22 implique que la machine à bobiner comporte des moyens pour commander la rotation du bras tournant 5 jusqu'à une position prédéterminée lorsque les moyens formant crochet 22 sont déplacés pour couper la trajectoire du fil conducteur 9, de façon que les moyens formant crochet 22 accrochent ledit fil conducteur.

Ces moyens sont des moyens connus en eux-mêmes adaptés à permettre l'arrêt du bras tournant 5 dans une position dans laquelle le guide 8 se trouve dans une position située au-dessous du niveau des moyens formant crochet 22, comme schématisé à la figure 2. Ces moyens comportent par exemple des moyens pour maintenir l'alimentation du moteur entraînant le bras tournant 5, et une rotation lente du bras 5, jusqu'à ce qu'un repère de position angulaire du bras soit passé devant un détecteur placé dans une position prédéterminée. Ces moyens peuvent également comporter, par exemple, en plus du moteur commandant la rotation à grande vitesse du bras 5 pendant une opération de bobinage, un moteur auxiliaire, par exemple un moteur pas à pas, (non représenté), commandant une rotation à faible vitesse du bras 5 jusqu'au passage du repère de position angulaire devant le capteur précité.

On décrira en détail plus loin des moyens pour déplacer les moyens formant crochet 22 de façon à accrocher le fil 9 et à amener ce fil au voisinage de l'une des chevilles 11a, 11b, 11c.

Les moyens pour faire passer le fil conducteur 9 autour d'une cheville 11a, 11b, 11c comprennent un élément presseur 24 et des moyens pour déplacer cet élément presseur 24 sensiblement parallèlement à l'axe de ladite cheville.

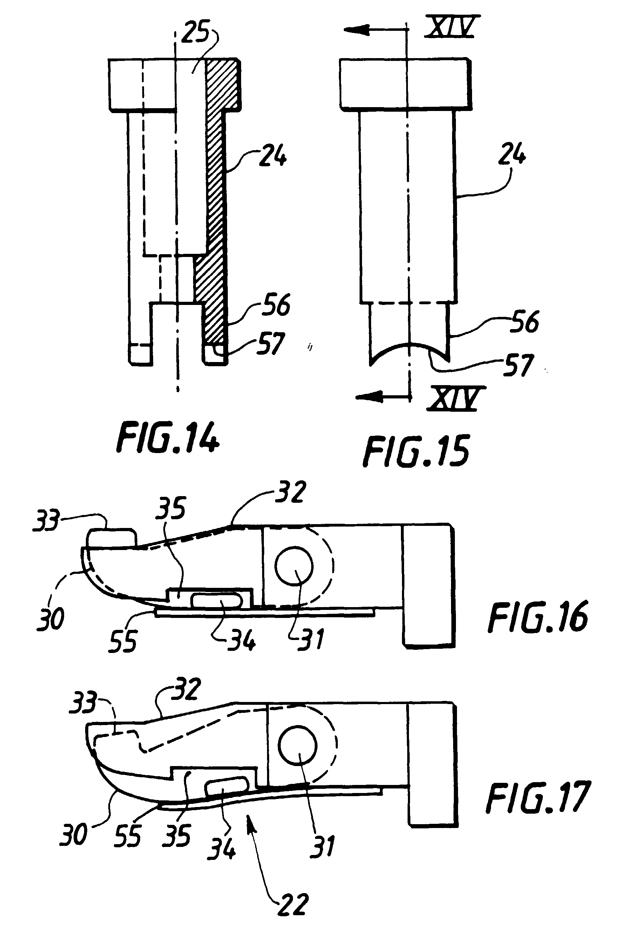

Dans la réalisation représentée en détail aux figures 14 et 15, l'élément presseur 24 comporte un évidement longitudinal 25 qui vient coiffer la cheville lorsque l'élément presseur 24 fait passer le fil conducteur 9 autour de la dite cheville au cours de son déplacement vers celle-ci. En outre, la partie inférieure de l'élément presseur 24 comporte deux lèvres parallèles 56 en saillie vers le bas se terminant par une échancrure concave 57 adaptée à rassembler les deux brins du fil conducteur 9 constituant la boucle 12 à former.

Dans la réalisation représentée en détail aux figures 3 à 5, une platine 26 est montée à l'extrémité inférieure de la tige 27 d'un vérin 28 disposé verticalement.

Sur la platine 26 sont montés trois éléments presseurs 24 en saillie vers le bas. Chaque élément presseur 24 est monté mobile en direction verticale le long d'une tige de guidage contre l'effet d'un ressort antagoniste 29. Ainsi lorsque la platine 26 descend vers le manchon 23 quand on actionne le vérin 28, les trois éléments presseurs 24 viennent coiffer respectivement les trois chevilles 11a, 11b, 11c , et appuient sur le fil conducteur 9 et sur tout obstacle avec une force limitée à la force du ressort 29.

Les moyens pour libérer le fil conducteur 9 des moyens formant crochet 22 comprennent un crochet escamotable 30 adapté à s'effacer lorsque le fil conducteur 9 est passé autour de la cheville 11a, 11b, 11c.

Dans la réalisation représentée aux figures 16 et 17, le crochet escamotable 30 est un crochet monté de manière pivotante autour d'un axe de pivotement 31 sur un doigt support 32 contre l'action d'un ressort de rappel 55, par exemple un ressort à lame 55 fixé à la partie inférieure du doigt 32.

Le crochet 30 comporte un ergot 33 en saillie vers le haut adapté à accrocher le fil conducteur 9 lorsque le crochet 30 est déplacé pour couper la trajectoire dudit fil. Le crochet pivotant 30 comporte également une patte d'actionnement 34 faisant saillie latéralement vers l'extérieur du doigt support 32 par une ouverture 35 de celui-ci. Par ailleurs, l'élément presseur 24 comporte un organe schématisé en 54 à la figure 4 et adapté à venir en prise avec ladite patte d'actionnement 34 pour faire pivoter le crochet 30 lorsque l'élément presseur 24 presse le fil conducteur 9 pour le faire passer autour de la cheville (11a, 11b ou 11c). L'organe 54 pourrait être indépendant de l'organe presseur 24.

Lorsque le crochet 30 a pivoté sous l'action de l'impulsion reçue par la patte d'actionnement 34, le fil conducteur 9 est ainsi libéré dudit crochet et peut être pressé vers le bas jusqu'à la partie inférieure de la cheville concernée tandis que le doigt support 32 est éloigné de ladite cheville.

Les moyens pour déplacer les moyens formant crochet 22 comportent au moins deux vérins respectivement adaptés à déplacer lesdits moyens formant crochet 22 selon deux directions sensiblement perpendiculaires l'une à l'autre, en l'occurrence la direction de l'axe 4 de l'induit 1 et la direction de l'axe 7 de l'arbre 6 de rotation du bras tournant 5.

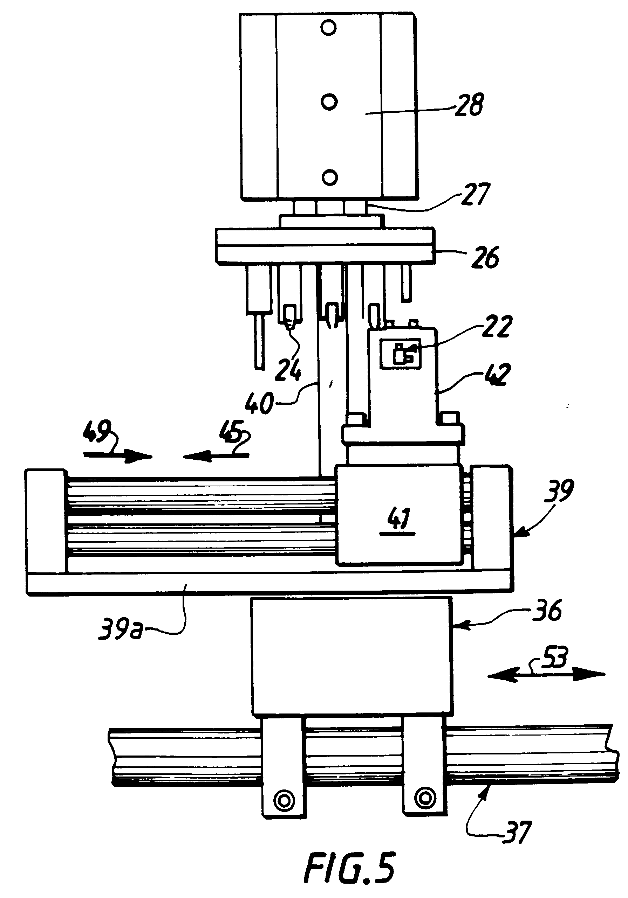

Dans le mode de réalisation représenté aux figures 3 à 5, un premier chariot 36 est mobile par rapport à des glissières 37 du bâti 38 de la machine à bobiner, dans la direction de l'axe 4 de l'induit 1, sous l'action d'un premier vérin schématisé en 14. Ceci permet d'adapter la machine à bobiner et le manchon 23 à la longueur de l'arbre d'un induit 1 à bobiner. Voir flèche 53 à la figure 5.

Un second chariot 39 est mobile dans la direction de l'axe 7 de l'arbre 6 de rotation du bras tournant 5 sous l'effet d'un second vérin schématisé en 15.

Le second chariot 39 porte une potence 40 à l'extrémité supérieure de laquelle est fixé le vérin 28 dont la tige 27 porte la platine 26 sur laquelle sont fixés trois éléments presseurs 24.

Le second chariot 39 comporte également un plateau 39a s'étendant parallèlement à l'axe 4 de l'induit 1 et sur lequel est monté de manière coulissante dans la direction de l'axe 4, sous l'action d'un vérin non représenté, un bloc support 41. Le support 41 est prolongé vers le haut par une plaque 42 portant le doigt support 32 qui est solidaire d'un vérin 43 de déplacement du doigt 32 dans la direction de l'axe 7.

La plaque 42 est, le cas échéant, mobile verticalement sous l'action d'un vérin non représenté monté à l'intérieur du bloc 41.

On notera que les trois éléments presseurs 24 sont alignés dans la direction de l'axe 4 de l'induit et sont disposés sur la platine 26 de manière à se trouver respectivement chacun au-dessus et à l'aplomb d'une cheville 11a, 11b, 11c.

On a représenté aux figures 6 à 13 les différentes opérations de formation d'une boucle sur la machine selon l'invention. Pour la clarté de ces schémas, on n'a représenté qu'un seul élément presseur 24 pour la formation d'une boucle sur la cheville 11a la plus proche de l'induit 1 à bobiner.

A la figure 6, l'induit 1 est tenu entre la pince 2 et le palier 3 prolongé par le manchon 23 qui porte les chevilles 11a, 11b, 11c.

Les moyens formant crochet 22 et l'élément presseur 24 sont éloignés du plan vertical passant par l'axe 4 de l'induit 1 du côté opposé à celui où est disposé le bras tournant 5.

Les plaques de guidage 21 sont insérées dans les encoches 10 correspondantes pour guider le fil conducteur 9 à l'intérieur de ces encoches pendant le bobinage.

Dans l'étape schématisée à la figure 7, du fait d'un coulissement du second chariot 39, les moyens formant crochet 22 et l'élément presseur 24 se déplacent dans la direction de l'axe 7 vers le bras tournant 5 (flèches 44). L'élément presseur 24 se place au-dessus de la cheville lla.

A la figure 8, les moyens formant crochet 22 se déplacent parallèlement à l'axe 4 de l'induit (flèche 45) puis parallèlement à l'axe 7 vers l'arbre tournant (flèche 46) pour être placé sur la trajectoire du fil conducteur 9. L'élément presseur 24 est immobile.

A la figure 9, le bras tournant 5 a tourné autour de son arbre 6 dans le sens de la flèche 47, et les moyens formant crochet 22 placés sur la trajectoire du fil conducteur 9 ont accroché ledit fil. Le bras tournant 5 peut être arrêté.

Dans le schéma de la figure 10, les moyens formant crochet 22 s'éloignent du bras tournant 5 pour amener le fil retenu par le crochet 30 sensiblement dans le plan vertical contenant les chevilles 11a à 11c (flèche 48).

Dans le schéma de la figure 11, les moyens formant crochet 22 se déplacent dans la direction de l'axe 4 de l'induit 1 (flèche 49) pour s'arrêter au-delà de la cheville 11a entre celle-ci et la cheville 11b.

Dans le schéma de la figure 12, l'élément presseur 24 se déplace verticalement vers le bas (flèche 50) pour abaisser le fil 9 autour de la cheville lla et faire pivoter le crochet pivotant 30 pour libérer le fil 9 dudit crochet. Le doigt support 32 peut alors être éloigné du bras tournant 5 (flèche 51) sous l'action du vérin 43.

Dans le schéma de la figure 13, l'élément presseur 24 est remonté vers le haut (flèche 52). Il peut ensuite être ramené dans sa position arrière de la figure 6 avec les moyens formant crochet 22. Les plaques de guidage 21 sont toujours en place pour permettre le bobinage d'un second enroulement dans les mêmes encoches, bobinage qui sera suivi de la formation d'une boucle qui sera passée autour de la seconde cheville 11b. La même opération sera, le cas échéant, encore répétée avec la troisième cheville 11c.

Dans le cas où le prochain enroulement à bobiner concerne des encoches différentes de celles dans lesquelles on a bobiné le précédent enroulement, les plaques de guidage 21 sont retirées pour permettre une rotation de l'induit 1, puis sont remises en place pour le bobinage du nouvel enroulement.

Bien entendu, la présente invention n'est pas limitée aux modes de réalisation que l'on vient de décrire, et l'on peut effectuer sur ceux-ci de nombreux changements et modifications sans sortir du domaine de l'invention.

On peut ainsi remplacer les moyens décrits ci-dessus pour former la boucle par des moyens équivalents remplissant la même fonction pour obtenir le même résultat.

On peut ainsi prévoir d'autres moyens que ceux décrits pour les déplacements de l'élément presseur et des moyens formant crochet 22, et décomposer et organiser lesdits déplacements d'une manière différente de celle décrite.

Il est ainsi possible d'améliorer la précision des déplacements du crochet 30 par rapport à la cheville 11 concernée si les moyens formant crochet 22 sont montés sur une plaque 42 mobile verticalement. Le crochet 30, qui doit toujours être sensiblement au-dessus des chevilles 11a, 11b, 11c à l'approche de ces dernières, peut alors être abaissé pour commencer à engager le fil conducteur 9 autour de la cheville concernée.

## Revendications

1. Machine pour bobiner automatiquement un induit (1) de petit moteur électrique à courant continu à rotor bobiné, cette machine comportant :
- des moyens (2,3) pour supporter un induit (1) à bobiner de façon que l'axe (4) dudit induit (1) ait une position prédéterminée;
- un bras tournant (5) monté sur un arbre de rotation (6) d'axe (7) sensiblement perpendiculaire à l'axe (4) de l'induit (1) à bobiner;
- un guide (8) monté à l'extrémité libre du bras tournant (5) et adapté à dévider un fil conducteur (9), de façon à insérer, lorsque le bras (5) tourne, un nombre prédéterminé de spires à l'intérieur de deux encoches (10) conjuguées de l'induit (1) pour constituer un enroulement de spires logé dans ces deux encoches (10);
- au moins deux chevilles (11a, 11b, 11c) situées à des distances respectives différentes de l'induit (1) à bobiner pour la formation d'une boucle (12) de fil conducteur (9) passant autour de l'une des chevilles (11a, 11b, 11c) entre deux opérations consécutives de bobinage d'un enroulement de spires ;
caractérisée en ce qu'elle comporte en outre :
- des moyens formant crochet (22) adaptés à accrocher le fil conducteur (9) à la fin d'une opération de boinage d'un enroulement ;
- des moyens pour déplacer les moyens formant crochet (22) de façon à couper la trajectoire du fil conducteur (9) lorsque le bras (5) tourne afin d'accrocher ledit fil conducteur (9), puis à amener le fil conducteur (9) au voisinage de l'une des chevilles (11a, 11b, 11c) ;
- des moyens pour faire passer le fil conducteur autour de ladite cheville (11a,11b,11c) et des moyens pour libérer le fil conducteur (9) des moyens formant crochet (22).

2. Machine selon la revendication 1, caractérisée en ce qu'elle comporte des moyens pour commander la rotation du bras tournant (5) jusqu'à une position prédéterminée lorsque les moyens formant crochet (22) sont déplacés pour couper la trajectoire du fil conducteur (9), de façon que les moyens formant crochet (22) accrochent ledit fil conducteur (9).

3. Machine selon la revendication 1 ou 2, caractérisée en ce que les moyens pour faire passer le fil conducteur (9) autour de la cheville (11a,11b,11c) comprennent au moins un élément presseur (24) et des moyens (27,28) pour déplacer cet élément presseur (24) sensiblement parallèlement à l'axe de la cheville (11a,11b,11c).

4. Machine selon la revendication 3, caractérisée en ce que l'élément presseur (24) comporte un évidement longitudinal (25) qui vient coiffer la cheville (11a,11b,11c) lorsque l'élément presseur (24) fait passer le fil conducteur (9) autour de ladite cheville au cours de son déplacement vers celle-ci.

5. Machine selon l'une des revendications 1 à 4, caractérisée en ce que les moyens pour libérer le fil (9) des moyens formant crochet (22) comprennent un crochet escamotable 30 adapté à s'effacer lorsque le fil conducteur (9) est passé autour de la cheville (11a,11b,11c).

6. Machine selon la revendication 5, caractérisée en ce que le crochet escamotable 30 est un crochet (30) monté de manière pivotante sur un doigt support (32).

7. Machine selon les revendications 3 ou 4 et 6, caractérisée en ce que le crochet pivotant (30) comporte une patte d'actionnement (34), et en ce que la machine comporte un organe (54) adapté à venir en prise avec ladite patte d'actionnement (34) pour faire pivoter le crochet (30) lorsque l'élément presseur (24) presse le fil conducteur (9) afin de le faire passer autour de la cheville (11a,11b,11c).

8. Machine selon l'une des revendications 1 à 7, caractérisée en ce que les moyens pour déplacer les moyens formant crochet (22) comportent au moins deux vérins respectivement adaptés à déplacer lesdits moyens formant crochet (22) selon deux directions sensiblement perpendiculaires l'une à l'autre.

9. Machine selon la revendication 8, caractérisée en ce que deux vérins sont adaptés à déplacer les moyens formant crochet (22) horizontalement respectivement dans la direction de l'axe (4) de l'induit (1) et dans la direction de l'axe (7) de l'arbre (6) de rotation du bras tournant (5).

10. Machine selon l'une quelconque des revendications 1 à 9, caractérisée en ce que les chevilles (11a, 11b, 11c) sont alignées selon une direction sensiblement parallèle à l'axe (4) de l'induit (1).
